# EUROPÄISCHE PATENTSCHRIFT

(11) **EP 0 807 670 B1**
(45) Veröffentlichungstag und Bekanntmachung des Hinweises auf die Patenterteilung: **19.07.2000**
(21) Anmeldenummer: 97107412.5
(22) Anmeldetag: 06.05.1997
(51) Int. Cl.: C09D 11/02

(54) **Verfahren zur Herstellung von Offsetdruckfarben**
Process for the preparation of offset printing inks
Procédé pour la préparation d'encres d'impression offset

(30) Priorität: 13.05.1996 DE 19619240
(43) Veröffentlichungstag der Anmeldung: 19.11.1997
(73) Patentinhaber: BASF Coatings Aktiengesellschaft, 48165 Münster (DE)
(72) Erfinder: Becker, Hans-Jürgen, Dr., 67434 Neustadt (DE); Zerbe, Thomas, 71409 Schwaikheim (DE); Klemm, Karl-Wilhelm, Dr., 70597 Stuttgart (DE)
(74) Vertreter: Karg, Jochen

(56) Entgegenhaltungen:
- EP-A- 0 022 746
- EP-A- 0 290 108
- EP-A- 0 503 897
- CH-A- 678 333
- US-A- 4 747 882

## Beschreibung

Die Erfindung betrifft ein Einstufenverfahren zur Herstellung von Offsetdruckfarben bzw. deren fließfähigen Konzentraten nach einem Einstufenverfahren.

Druckfarben werden üblicherweise hergestellt, indem Feststoffe, wie farbgebende Pigmente und Hilfsstoffe, mittels Dissolvern und Rührwerkskugelmühlen/Dreiwalzenwerk-Aggregaten in Bindemitteln und Flüssigkeiten, wie z.B. Ölen, dispergiert werden, wobei die Bindemittellösungen vorher durch Verkochen von Harzen und verschiedenen Zuschlagstoffen in Ölen erhalten werden. Dieser Druckfarbenherstellprozeß ist technisch sehr aufwendig, langwierig und energieintensiv.

Gemäß dem vorbekannten Stand der Technik wird als Einsatzstoff für die Druckfarbenherstellung zumindest ein, meist aber mehrere Bindemittel bestimmter Rheologie benötigt. Zur Herstellung der Bindemittel wird ein Harz, oft jedoch mehrere verschiedene Harze in einem Ölgemisch mehrere Stunden auf Temperaturen um 180°C unter Rühren erhitzt. Der Energieeintrag erfolgt üblicherweise über ein Wärmeträgeröl, das in einer getrennten gas-oder ölbefeuerten Anlage erhitzt wird, und der Prozess wird inertisiert. Nach dem Abkühlen wird bis zur Weitervararbeitung zwischengelagert. Um ausreichend lieferfähig zu sein, halten die Druckfarbenhersteller die für das spezifische Liefersortiment notwendigen Bindemittel vor. Die Lagerung erfolgt üblicherweise in Lagertanks, die zur Aufrechterhaltung der Pumpbarkeit der Bindemittel beheizt sind. Alternativ wird in Gebinden, z.B. 200 l Fässern, gelagert, deren Inhalt vor der Verwendung in einer Wärmekammer zur Verbesserung der Fließfähigkeit aufgeheizt wird. Während der Lagerung können sich abhängig von Dauer, Temperatur und Zusammensetzung der Gasüberschichtung Änderungen bzgl. der bei der Herstellung eingestellten Rheologiewerte ergeben.

Die Weiterverarbeitung zur Druckfarbe erfolgt dann wie oben beschrieben.

Es hat nicht an Versuchen gefehlt diesen Herstellprozeß abzukürzen und zu vereinfachen. So wird beispielsweise in der EP 0022746-A1 ein Verfahren beschrieben, bei dem Pigmente und bestimmte thermoplastische Harze in der Schmelze oder unter Zusatz von wieder zu entfernenden Lösungsmitteln miteinander vermischt werden, um pigmentierte Harze als Grundstoff für Druckfarben zu erhalten; der Vorgang der Farbherstellung aus diesen pigmentierten Harzen selbst ist aber nicht beschrieben. In der EP 0290108-B1 wird die Pigmentierung von thermoplastischen Kunststoff-Bindemitteln in einem Extruder bei Temperaturen oberhalb des Schmelzpunktes des Bindemittelharzes und Zufügen eines flüssigen Verdünnungsmittels kurz vor oder nach Verlassen des Extruders zur Herstellung eines Druckfarben-Grundstocks beschrieben.

CH 678 333 A5 offenbart ein Verfahren zur Herstellung von Druckfarben, bei dem das Bindemittel und weitere Komponenten der Druckfarbe wie beispielsweise Pigmente in einem Extruder eindosiert und darin intensiv miteinander vermischt werden. Für das Verfahren werden jedoch fertige Bindemittel als Ausgangsmaterialien eingesetzt, die oben geschilderte Herstellung von Bindemitteln aus Bindemittelharzen, Ölen und Zuschlagstoffen muß nach wie vor in einem separaten, vorgelagerten Schritt erfolgen.

Aufgabe der vorliegenden Erfindung war es, ein Verfahren aufzuzeigen, das es erlaubt, die Herstellung von Offsetdruckfarben ohne eine negative Beeinflussung ihrer Qualität weiter zu vereinfachen, und in bestimmten Fällen sogar eine Qualitätsverbesserung zu erzielen.

Überraschenderweise läßt sich diese Aufgabe durch das erfindungsgemäße Einstufenverfahren lösen.

Gegenstand der vorliegenden Erfindung ist ein einstufiges Verfahren zur Herstellung von Offsetdruckfarben oder deren Konzentraten daß dadurch gekennzeichnet ist, daß man die Einzelkomponenten für das Bindeimttel und weitere feste und flüssige Komponenten der Druckfarbe in einem Mischer miteinander vereinigt und darin direkt zur Offsetdruckfarbe bzw. zum Konzentrat verarbeitet werden.

Bei dem erfindungsgemäßen Einstufenverfahren erreicht das Produkt bei der Verarbeitung Temperaturen von mindestens 70°C, wobei der überwiegende Anteil der zur Aufheizung notwendigen Energie in Form von mechanischer Energie eingebracht wird.

Die Viskosität der erfindungsgemäß erhaltenen Offsetdruckfarbe bzw. des Konzentrats liegt im allgemeinen zwischen 10 und 300 Pas.

Bei erfindungsgemäßer Vorgehensweise wird auf die separate Herstellung des Bindemittels vollständig verzichtet. Der Gesamtherstellprozess ist damit zeitlich gesehen wesentlich kürzer und die Reproduzierbarkeit des Verfahrens wegen des Wegfalls einiger Verfahrensstufen und der Zwischenlagerung stark verbessert.

Die Pigmente können als trockene Pigmente oder Pigmentvorstufen oder auch in Form einer Paste in den Mischer eingetragen werden.

Das erfindungsgemäße Einstufenverfahren zur Herstellung von Offsetdruckfarben läßt sich wesentlich einfacher und wirtschaftlicher als die Verfahren des bekannten Standes der Technik durchführen. Außerdem zeichnen sich die erfindungsgemäß hergestellten Druckfarben durch verbesserte Qualität aus, die sich beispielsweise in einer Verringerung des Bronciereffektes (Farbtonveränderung je nach einfallendem Licht) zeigt.

Zum erfindungsgemäßen Verfahren ist im einzelnen folgendes auszuführen.

Unter Offset-Druckfarben im Sinne der Erfindung werden die für die üblichen Offsetdruckverfahren, wie z.B. Bogen-Offset-, i Rollen-Offset-, Schnell-Offset-, Endlos- und Blech-Druck üblichen verstanden, deren Zusammensetzung und Kombination der Rohstoffe in weiten Grenzen variabel sind. Dies gilt auch für die den Druckfarben zugrundeliegenden festen und flüssigen Einzelkomponenten. Die festen Einzelkomponenten können in Pulver- bzw. Granulatform oder auch als Pasten eingebracht werden.

Als Pigmente eignen sich die üblicherweise für Offsetdruckverfahren geeigneten, beispielsweise Pigmentruß, Phthalocyanin (CI 15), Rubintoner (CI 57:1), Diarylgelb (CI 12/CI 13) sowie die im Schmuckfarbenbereich üblichen Pigmente. Ferner können Füllstoffe, wie Calciumcarbonat und anorganische Pigmente eingesetzt werden.

Als Hartharze, die z.B. in Teilchengrößen < 1 cm eingesetzt werden können, eignen sich beispielsweise Kolophoniumharze, Kohlenwasserstoffharze, modifizierte Kolophoniumharze, beispielsweise solche die mit Acrylsäure oder Maleinsäure modifiziert sind, modifizierte Kohlenwasserstoffharze, beispielsweise solche die mit Kolophonium oder Phenolharz modifiziert sind, Acrylharze, Kumaronharze, Indenharze, Cyclokautschuk sowie Gemische derartiger Harze,

Als Additive sind die üblichen Thixotropierungs- und Verdickungsmittel zu nennen, wie z.B. Bentonite und/oder Kieselsäure, Geliermittel, wie z.B. Aluminiumchelat (=polymerer organischer Aluminiumkomplex, gelöst in Dibutylphthahalat und Mineralöl), Netzmittel, wie z.B. Sojalecithin, Fettsäureester oder Polyhydroxysterinsäure; Sikkative, wie z.B. Cobalt- und Manganverbindungen und Gleitmittel, wie z.B. für Offsetdruckfarben übliche Wachse.

Als flüssige Komponenten der Druckfarben sind zu nennen pflanzliche Öle und davon abgeleitete Polyester (Alkyde), z.B. auf Basis von Leinöl, Sojaöl, Sonnenblumenöl, Maiskeimöl, Traubenöl, Safloröl, Tallöl, Baumwollsaatöl, Ricinusöl, Holzöl, Oiticicaöl, Perillaöl, sowie Mineralöle und organische Lösungsmittel, wie z.B. aliphatische und/oder aromatische Kohlenwasserstoffe mit einem Siedebereich zwischen 150 und 400°C, z.B. Druckfarbenöl (= überwiegend paraffinisches Kohlenwasserstoffgemisch aus 67 % Paraffinen, 25 % Naphthenen und 8 % Aromaten mit einem Siedebereich zwischen 260 und 290°C z.B. Mihagan 26/29 B), sowie Weichmacher, wie z.B. Ester der Adipinsäure und Citronensäure, wie Dinonyladipat, Isotridecylalkohol und gegebenenfalls Antioxidantien (z.B. 2,6-Di-tert.butylkresol).

Die flüssigen und festen Einzelkomponenten werden in den für die Druckfarbe üblichen Mengenverhältnissen in einem Mischer miteinander vereinigt und darin direkt zur Offsetdruckfarbe bzw. zum Konzentrat verarbeitet. Als Mischer eignen sich kontinuierlich oder diskontinuierlich arbeitende Mischer, die beispielsweise mit einer Leistung von ca. 60 KW/m³ betrieben werden. Geeignete Mischer sind z.B. Doppelwellendissolver, Laboratory Blender (der Fa. Waring Commercial) u. a. m.

Von Bedeutung ist, daß ausreichend mechanische Energie eingetragen wird. Der Prozeß kann durch zusätzliches Einbringen von Wärme unterstützt werden. In bestimmten Fällen kann es aber auch notwendig sein, die beim Einbringen der mechanischen Energie entstandene Wärme durch geeignete Kühlung abzuführen.

Ein kontinuierlich arbeitender Mischer kann also zweckmäßigerweise sektionsweise beheiz- und kühlbar sein, während ein nicht kontinuierlich arbeitender Mischer sowohl über Heizung als auch Kühlung verfügen kann.

Der Prozeß kann unter Luft durchgeführt werden. In bestimmten Fällen kann es aber auch von Vorteil sein, unter Inertgasatmosphäre zu arbeiten, um so Lufteinschlüsse zu vermeiden. Weiter kann es bei bestimmten Fällen von Vorteil sein, enthaltene Gaseinschlüsse durch Anlegen von Vakuum zu entfernen. Es ist aber auch möglich, das Produkt durch eine anschließende Passage über ein Dreiwalzwerk zu entlüften.

Die Hartharze, farbgebenden Pigmente und festen Hilfsstoffe werden pulverförmig oder als Granulat eingegeben. Die Energie, die zur Zerkleinerung des Granulats benötigt wird, muß dann natürlich zusätzlich eingebracht werden.

Aus bestimmten Gründen, die aber nicht verfahrensbedingt sind, besteht oftmals das Verlangen, bestimmte Komponenten, wie farbgebende Pigmente oder auch Zuschläge, in Form von Pasten einzubringen. Diese Vorgehensweise ist ebenfalls ohne Nachteil möglich.

Bei bestimmten, sehr temperaturempfindlichen Rezeptbestandteilen kann es von Vorteil sein, diese Bestandteile z.B. in pastenförmiger Form erst nach Abkühlen des Ansatzes unter die kritische Temperatur einzumischen.

Das erfindungsgemäße Verfahren erlaubt eine erstaunliche Variabilität. So kann z.B. bei der Herstellung von Bogenoffsetfarben das Sikkativ bereits im ersten Schritt zugegeben und miteingemischt werden. Je nach Gegebenheit beim Anwender kann das Sikkativ auch dem Fertigprodukt beigemischt werden. Genauso verhält es sich mit anderen Rezeptbestandteilen. Es ist also auch möglich, ein Druckfarbenkonzentrat herzustellen und dieses später zu verdünnen, eine Vorgehensweise, die bestimmte logistische Vorteile bieten kann.

Die in den Beispielen bzw. Vergleichbeispielen genannten Teile und Prozente sind, soweit nicht anders angegeben, Gewichtsteile und Gewichtsprozente.

### Beispiel 1

In einem Labormixer (Fabrikat: Waring) werden zu 52 Teilen eines Gemisches aus:

| | |
|---|---|
| 29,9 Teilen | Druckfarbenöl (Siedebereich 260° bis 290°C) |
| 11,77Teilen | Lackleinöl |
| 4,9 Teilen | Rizinusöl und |
| 3,6 Teilen | eines Gemisches aus |
| | - 20 % Ditertiärbutylkresol |
| | - 10 % Dinonyladipat |
| | und 70 % Druckfarbenöl (Siedebereich 260°C bis 290°C) |
| 0,3 Teilen | Isotridecylalkohol |
| 1,5 Teilen | langöligem Leinölalkyd und |
| 0,03 Teilen | Aluminiumchelat |

48,0 Teile eines in einer Labormühle (Fabrikat: Ika) vorzerkleinerten Gemisches aus:

| | |
|---|---|
| 30,8 Teilen | kolophoniummodifiziertes Phenolharz |
| und 16,7 Teilen | Pigmentrot 57 und |
| 0,5 Teilen | PTFE-Wachs |

gegeben und 5 Minuten lang gerührt. Die Temperatur des Ansatzes steigt bei dem Mischvorgang auf 123°C an.

Durch Einrühren von 2 % Isotridecylalkohol und 4 % Druckfarbenöl wird die gewünschte Rheologie eingestellt. Anschließend erfolgt eine Passage über ein Dreiwalzwerk.

### Vergleichsbeispiel

Ein Gemisch aus

| | |
|---|---|
| 16,7 Teilen | Pigmentrot 57, |
| 0,5 Teilen | PTFE-Wachs und |
| 2,9 Teilen | eines Gemisches aus |
| | - 20 % Ditertiärbutylkresol |
| | - 10 % Dinonyladipat |
| | und 70 % Druckfarbenöl (Siedebereich 260°C bis 290°C) |
| 3,5 Teilen | Lackleinöl |
| 2,0 Teilen | Druckfarbenöl (Siedebereich 260°C bis 290°C) |
| 4,9 Teilen | Rizinusöl |
| 62,2 Teilen | Bindemittel A |
| 7,3 Teilen | Bindemittel B |

wird mittels eines Dissolvers vordispergiert. Nach der weiteren Dispergierung in einer Rührwerkskugelmühle erfolgt durch Einrühren von Isotridecylalkohol und des Druckfarbenöls (z.B. Mihagan 26/29 B) eine Einstellung der Rheologie auf die Werte des Beispiels 1. Abschließend erfolgt wieder eine Passage über ein Dreiwalzwerk.

Bindemittel A wurde hergestellt durch zweistündiges Erhitzen unter Rühren auf 180°C einer Mischung aus

| | |
|---|---|
| 38,2 Teilen | Kolophoniummodifiziertem Phenolharz |
| in 15,2 Teilen | Lackleinöl |
| 13,6 Teilen | Druckfarbenöl (Siedebereich 260°C bis 290°C) und |
| 0,3 Teilen | eines Gemisches aus |
| | - 20 % Ditertiärbutylkresol |
| | - 10 % Dinonyladipat |
| | und 70 % Druckfarbenöl (Siedebereich 260°C bis 290°C) sowie |
| 20,0 Teilen | langöliges Leinölalkyd. |

Nach der Zugabe von

| | |
|---|---|
| 2,3 Teilen | Druckfarbenöl (Siedebereich 260°C bis 290°C) und |
| 0,4 Teilen | Aluminiumchelat |

wird die Temperatur weitere 30 Min. auf 180°C gehalten. Nach der Zugabe von

| | |
|---|---|
| 10,0 Teilen | Lackleinöl |

wird filtriert und abgekühlt.

Bindemittel B wurde hergestellt durch zweistündiges Erhitzen auf 190°C und Rühren eines Gemisches aus

| | |
|---|---|
| 44,8 Teilen | kolophoniummodifiziertem Phenolharz |
| in | |
| 10,7 Teilen | Lackleinöl |
| 33,0 Teilen | Druckfarbenöl (Siedebereich 260°C bis 290°C) |
| 0,5 Teilen | Isotridecylalkohol und |
| 1,0 Teilen | eines Gemisches aus |
| | - 20 % Ditertiärbutylkresol |
| | - 10 % Dinonyladipat und 70 % Druckfarbenöl (Siedebereich 260°C bis 290°C) |

Nach der Zugabe von

| | |
|---|---|
| 10,0 Teilen | Druckfarbenöl (Siedebereich 260°C bis290°C) |

wurde filtriert und abgekühlt.

### Beispiel 2

### Bestimmung des Bronciereffekts (Meßgerät: Optronic Colour flash 45; Lichtart D65/2°)

Die erfindungsgemäße Herstellmethode führt überraschenderweise auch zu einer Verringerung des sogenannten Bronciereffektes (Farbtonveränderung je nach einfallendem Licht).

Dieser störende Effekt ist z.B. bei halbdeckenden Rubintonern, wie z.B. Litholrubin D 4560 DD (der BASF) oder Irgalithrubin LPBC (der Ciba-Geigy) deutlich erkennbar. Nach einer Lackierung mit Dispersionslack (oder auch Laminierung) verschwindet dieser optische Eindruck vollkommen.

Testfarben gleicher Zusammensetzung, die einmal konventionell und zum anderen erfindungsgemäß hergestellt werden, wurden auf gestrichenes Papier gedruckt und hälftig mit Dispersionslack beschichtet. Da diese Eigenschaft besonders über Schwarz sichtbar wird, wurde ein schwarzer Untergrund gewählt. Danach wird die Farbtondifferenz des jeweiligen Druckes mit und ohne Lack bestimmt.

Je größer die Farbtondifferenz Δ E ist, um so stärker ist der Bronciereffekt des unlackierten Druckes.

Die 17 %-ig mit Litholrubin pigmentierten Farben zeigen, sofern sie nach dem erfindungsgemäßen Verfahren hergestellt wurden, einen um 28 % geringeren Bronciereffekt als entsprechende konventionell hergestellte Farben.

## Patentansprüche

1. Verfahren zur Herstellung von Offsetdruckfarben oder deren Konzentraten, dadurch gekennzeichnet, daß man die Einzelkomponenten für das Bindemittel und weitere feste und flüssige Komponenten der Druckfarbe in einem Mischer miteinander vereinigt und darin direkt zur Offsetdruckfarbe bzw. zum Konzentrat verarbeitet.

2. Verfahren nach Anspruch 1, dadurch gekennzeichnet, daß die Verarbeitung bei Temperaturen zwischen 70 und 150°C erfolgt.

3. Verfahren nach Anspruch 1 oder 2, dadurch gekennzeichnet, daß die Energie zum Aufheizen zum überwiegenden Anteil in Form von mechanischer Energie eingebracht wird.

4. Verfahren nach einem der vorhergehenden Ansprüche, dadurch gekennzeichnet, daß die Viskosität der Offsetdruckfarbe bzw. des Konzentrats zwischen 10 und 300 Pas, gemessen bei 25°C beträgt.

5. Verfahren nach einem der vorhergehenden Ansprüche, dadurch gekennzeichnet, daß ein oder mehrere weitere Konfektionierschritte angeschlossen werden.

6. Verfahren nach einem der vorhergehenden Ansprüche, dadurch gekennzeichnet, daß Pigmente als trockene Pigmente oder Pigmentvorstufen zugegeben werden.

7. Verfahren nach einem der vorhergehenden Ansprüche, dadurch gekennzeichnet, daß mindestens ein Teil der Pigmente in Form einer Paste zugegeben wird.

## Claims

1. A process for preparing an offset printing ink or concentrate thereof, which comprises combining the individual components for the binder and further solid and liquid components of the printing ink in a mixer and processing them directly therein to form the offset-printing ink or concentrate.

2. A process as claimed in claim 1, wherein processing takes place at from 70 to 150°C.

3. A process as claimed in claim 1 or 2, wherein most of the heating energy is supplied in the form of mechanical energy.

4. A process as claimed in any of the preceding claims, wherein the viscosity of the ink or concentrate is from 10 to 300 Pas, measured at 25°C.

5. A process as claimed in any of the preceding claims, which is followed by one or more further formulation steps.

6. A process as claimed in any of the preceding claims, wherein pigments are added as dry pigments or pigment precursors.

7. A process as claimed in any of the preceding claims, wherein at least some of the pigments are added as a paste.

## Revendications

1. Procédé de préparation d'encres pour l'impression en offset ou de leurs concentrés, caractérisé par le fait que l'on combine entre eux dans un mélangeur les composants individuels nécessaires pour le liant et d'autres composants solides et liquides de l'encre d'impression et on transforme directement dans cet appareil en l'encre d'impression en offset ou son concentré.

2. Procédé selon la revendication 1, caractérisé par le fait que la transformation est réalisée à des températures de 70 à 150°C.

3. Procédé selon la revendication 1 ou 2, caractérisé par le fait que l'énergie nécessaire pour le chauffage est apportée principalement sous la forme d'énergie mécanique.

4. Procédé selon une des revendications qui précèdent, caractérisé par le fait que la viscosité de l'encre d'impression en offset ou du concentré se situe entre 10 et 300 Pa.s, la mesure étant faite à 25°C.

5. Procédé selon une des revendications qui précèdent, caractérisé par le fait que l'on fait suivre d'une ou plusieurs autres opérations de finissage.

6. Procédé selon une des revendications qui précèdent, caractérisé par le fait que les pigments sont ajoutés à l'état de pigments secs ou de produits intermédiaires de la préparation de pigments.

7. Procédé selon une des revendications qui précèdent, caractérisé par le fait qu'une partie au moins des pigments est ajoutée à l'état de pâte.
